# EUROPEAN PATENT APPLICATION

(11) **EP 0 653 570 A2**
(43) Date of publication of application: **17.05.1995**
(21) Application number: 94308178.6
(22) Date of filing: 07.11.1994
(51) Int. Cl.: F16B 19/10

(54) **Blind rivet and its sheath**

(30) Priority: 12.11.1993 JP 60885/93; 17.05.1994 JP 102589/94
(71) Applicant: EMHART INC., Newark, Delaware 19711 (US)
(72) Inventor: Minami, Mitsuhiro, Toyohashi-shi, Aichi-ken (JP)
(74) Representative: Stagg, Diana Christine

(57) **Abstract**

In order to increase the sealability of blind rivets provided with a plastics sheath, the outer surface of a rivet body is formed with a circumferential groove (15) and the inner surface of a tubular sheath (10) is formed with a raised portion (17) fitting into the groove (15).

## Description

The present invention relates to a blind rivet capable of fastening a plurality of panels from one direction.

Known blind rivets comprise a hollow rivet body and a mandrel inserted in the rivet body. With the mandrel head first, the blind rivet is inserted into mounting holes of panels to cause the flange of the rivet body to come in surface-contact with a panel. Then, the mandrel is pulled by a tool so strongly that the mandrel is broken at a small-diameter portion whereby the diametrically enlarged head of the mandrel buckles the rivet body shank to be expanded in order to connect a plurality of panels to each other by means of the buckled portion of the shank and the flange. The blind rivet is convenient in that the fastening operation is carried out from one direction. It is current practice to enhance the sealability of the connected portion by covering the rivet body of the blind rivet with a plastic cover and fastening the cover together with the rivet body to the panels.

To cover the rivet body of the blind rivet with a plastic cover and fasten them is preferable since it enhances sealability as stated above. However, the connection between the cover and the rivet body is weak and it gives rise to a problem that the cover tends to come off in the process of distribution. When the blind rivet is re-inserted from a wrong mounting hole to a correct mounting hole, the cover also tends to come off from the blind rivet. Further, since a cover on the rivet body increases the outside diameter of the rivet body, a blind rivet having a considerably small diameter must be used if mounting holes are small and it is hard to obtain the same fastening force as with a cover-less rivet body that can be used in such mounting holes.

Accordingly, the present invention aims to provide a blind rivet which can be attached without disengagement of its plastic sheath therefrom.

According to the present invention, there is provided a blind rivet comprising a hollow rivet body including a shank and a flange on one end of the shank and a mandrel which is longer than the body and is inserted into the hollow hole of the body, the mandrel being inserted so that a diametrically enlarged head thereof is positioned on the shank end opposite to the flange, the shank of the rivet body being buckled to expand by strongly pulling the mandrel, the blind rivet being attached to an attachment member such as a panel by means of the buckled shank and the flange; characterised in that the rivet body is covered with a plastic sheath, which is formed into a tube having a tubular portion to cover the diametrically enlarged head of the mandrel and the shank of the rivet body; the outer surface of the rivet body shank is formed with a circumferential groove; and the inner surface of the tubular sheath is formed with a raised portion so that the raised portion fits into the circumferential groove.

In another embodiment of a blind rivet according to the present invention, a flange adapted to come into surface-contact with the flange of the rivet body is formed on an end of the sheath.

According to a preferred embodiment of the present invention, in the above-described blind rivet, it is possible to make the tubular portion of the tubular sheath in a non-circular sectional form such as an ellipse or a hexagon to forcibly fit the rivet body shank having a substantially circular sectional tubular portion. It is also possible to form in the flange of the tubular sheath an annular portion to surround the periphery of the flange of the rivet body to fit the rivet body flange in the annular portion. The circumferential groove of the peripheral surface of the rivet body shank is formed on the side closer to the diametrically enlarged head side end to get a shank portion between the circumferential groove and the diametrically enlarged head side inside the buckled portion of the shank upon buckling of the shank.

According to another preferred embodiment of the present invention, there also is provided a plastic sheath to cover a rivet body of a blind rivet which comprises a hollow rivet body having a shank and a flange on one end of the shank and a mandrel which is longer than the body and is inserted into the hollow hole of the body; characterised in that the sheath is formed in a tube having a tubular portion to cover the diametrically enlarged head of the mandrel and the shank of the rivet body, and the inner surface of the sheath is formed with a raised portion to fit in the circumferential groove of the rivet body shank. In a preferred embodiment of this invention, the sheath is formed in a caplike shape of which an end is closed.

The present invention is described further by way of example only with reference to the accompanying drawings in which:
Figure 1 is a partially sectional front view of a first embodiment blind rivet before assembled with a sheath;
Figure 2 is a partially sectional front view of the blind rivet of Figure 1 after assembled with the sheath;
Figure 3 is a partially sectional front view of the first embodiment blind rivet of which a rivet body is buckled to connected panels to each other;
Figure 4 is plan views of two modifications of the sheath;
Figure 5 is a sectional view showing another embodiment; and
Figure 6 is a sectional view showing a still another embodiment.

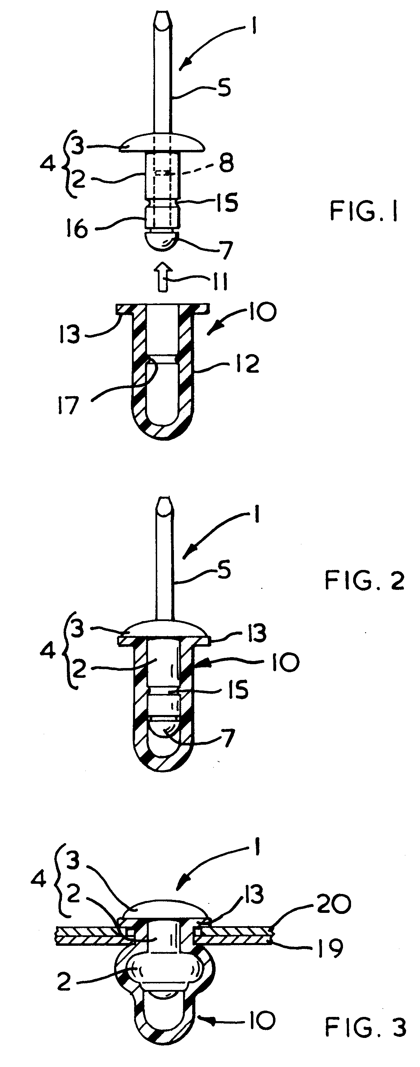

In Figures 1 and 2, a blind rivet 1 comprises a hollow rivet body 4 comprising a shank 2 and a flange 3 on one end of the shank 2, and a mandrel 5 which is inserted in the hollow shank of the body 4 and is longer than the body 4. The mandrel is formed with a diametrically enlarged head 7 on an end thereof. In the blind rivet 1, as illustrated, the mandrel 5 is inserted in the rivet body 4 so that the diametrically enlarged head 7 is positioned on the opposite end of the shank 2 to the rivet body flange 3. In a portion concealed in the shank 2 of the rivet body 4, a small-diameter portion 8 to be broken when the mandrel 5 is pulled strongly is formed. To fasten the blind rivet constructed as stated above, the rivet body 4 is inserted, the mandrel head 7 first, into mounting holes of panels until the flange 3 comes in surface-contact. Under the conditions, a swaging tool gripping the exposed portion of the mandrel 5 is put in operation to pull the mandrel so strongly as to break it at the small-diameter portion 8 so that the diametrically enlarged head 7 of the mandrel 5 buckles the shank 2 of the rivet body 4 to expand diametrically to connect the panels to each other by means of the buckled shank 2 and the flange 3. Since the blind rivet itself is widely known, description in further detail is omitted.

According to the present invention, a plastic sheath 10 is attached to the rivet body 4 as indicated by an arrow 11. The sheath 10 comprises a tubular portion 12 to cover both the diametrically enlarged head 7 of the mandrel 5 and the shank 2 of the rivet body 4, and a flange 13 to come in surface-contact with the flange 3 of the rivet body 4. The opposite end of the tubular portion 12 to the flange 13 is closed and the sheath 10 is formed like a cap as a whole. Further, according to the present invention, a circumferential groove 15 is formed on the outer surface of the shank 2 of the rivet body 4. The circumferential groove 15 is formed on the side closer to the diametrically enlarged head 7 so that when the shank 2 is buckled, a shank portion 16 between the circumferential groove 15 and the end on the diametrically enlarged head 7 side can get inside the buckled portion of the shank between the circumferential groove 15 and the flange 3. On the inner surface of the tubular sheath 10, a raised portion 17 to fit in the circumferential groove is formed in a position corresponding to the circumferential groove 15 of the shank 2 of the rivet 4. The raised portion 17 may be formed either fully or partially around the inner surface of the sheath 10.

Figure 2 shows the blind rivet 1 of which rivet body 4 is covered by the tubular sheath 10 as indicated by the arrow 11 of Figure 1. As described earlier, the tubular sheath 10 is strongly attached to the rivet body because the raised portion 17 is forcibly fitted in the circumferential groove 15 of the rivet body shank 2. Accordingly, there is no fear that the sheath will come off in the process of distribution or when the blind rivet is re-inserted from the wrong mounting hole of the panel to a correct hole. How to connect panels 19 and 20 by use of the blind rivet 1 covered by the tubular sheath 10 as stated above is described with reference to Figure 3. To begin with, the rivet body 4 is inserted, the mandrel head 7 first, into mounting holes of the panels 19 and 20 until the flange 30 comes into surface-contact. Then, the exposed portion of the mandrel 5 is gripped in a swaging tool which pulls the mandrel 5 strongly to break it at the small-diameter portion, so that the diametrically enlarged head 7 of the mandrel 5 buckles the shank 2 of the rivet body 4 to expand diametrically. When thus buckled, owing to the circumferential groove 15 provided in the shank 2, the shank portion 16 shown in Figure 2 gets inside the buckled shank portion between the circumferential groove 15 and the flange 3. Accordingly, the diameter of the buckled portion of the shank 2 becomes larger than that of the conventional blind rivet and coupling force is increased. As the buckled portion is large in diameter, the sealability due to the tubular sheath 10 is also improved remarkably.

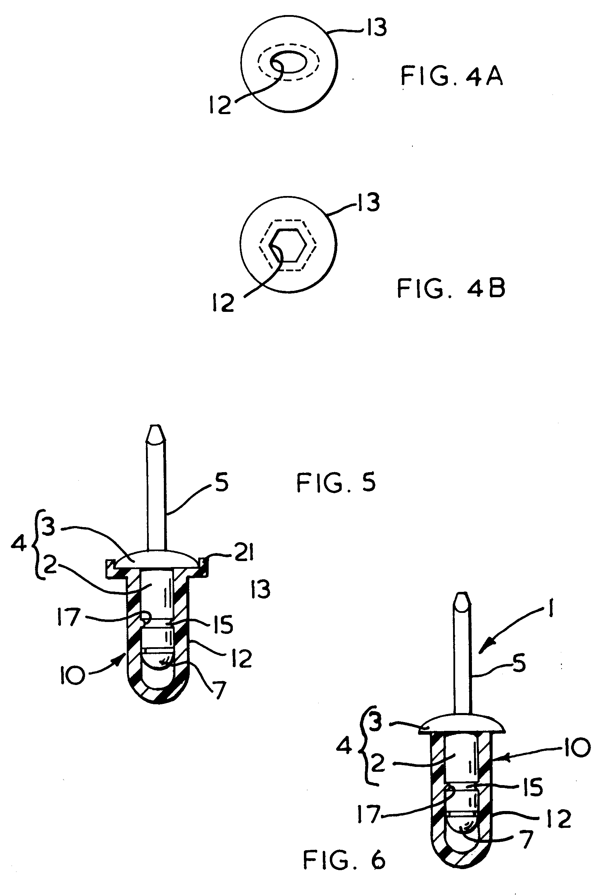

Figure 4 shows sectional shapes of the tubular portion 12 of the tubular sheath 10. They are formed in non-circular forms, i.e., in an elliptical form in (A) and in a hexagonal form in (B). The tubular portion 12 is made to be substantially equal in maximum inner diameter to the outer diameter of the rivet body shank 2. The tubular sheath 10 having such a tubular portion is inserted in the rivet body shank 2 which is of substantially circular sectional shape, so that the portion with the minor axis of the tubular portion 12 comes in tight contact with the rivet body shank 2 and is associated with the fit between the circumferential groove 15 and the raised portion 17 to fasten the tubular sheath 10 to the rivet body even more firmly.

Figure 5 shows another embodiment. In this embodiment, the flange 13 of the tubular sheath 10 is formed with an annular portion 21 as an extension thereof for surrounding the periphery of the flange 3 of the rivet body 4 which is fitted in it. In this case, the rivet body shank 2 is also inserted into the tubular sheath 10, so that the periphery of the flange 3 fits in the annular portion 21 and is associated with the fit between the circumferential groove 15 and the raised portion 17 to fasten sheath 10 to the rivet body even more tightly.

In the above-described embodiments, the tubular sheath 10 has the flange 13 on the end of the open side and the flange 13 is in contact with the flange 3 on the rivet body 4 of the blind rivet 1 when attached to the panels. In the present invention, however, the flange 13 may not be provided. Figure 6 shows such an example. In Figure 6, the same reference numerals are used to represent portions corresponding to the like elements which are provided in the aforementioned embodiments. For this reason, further explanation of this embodiment is omitted. In this embodiment, the panels are supported between the flange 3 of the rivet body 4 of the blind rivet 1 and the buckled portions of the shank 2 and the tubular sheath 10. In this embodiment, the upper end of the tubular portion 12 of the tubular sheath 10 is illustrated in contact with the bottom side of the flange 3 of the rivet body 4. But, there may be a space between the upper end of the tubular portion 12 and the flange 3 of the rivet body 4.

In the blind rivet according to the present invention, the sheath covering the rivet body is formed in a tube having a tubular portion to cover the diametrically enlarged head of the mandrel and the shank of the rivet body and a flange to come in surface-contact with the flange of the rivet body, and a circumferential groove is formed on the outer surface of the rivet body shank and the inner surface of the tubular sheath is formed with a raised portion so that the raised portion fits into the circumferential groove. Therefore, the sheath is connected to the rivet body firmly so as not to get off in the process of distribution even when the blind rivet is re-inserted from the wrong mounting hole of the panel to a correct hole. As the diametrically enlarged head side portion below the circumferential groove gets in the buckled portion of the rivet body shank to enlarge the buckled portion diametrically, coupling force is increased and the sealability by the sheath is enhanced. Moreover, since the diameter of the buckled portion can be enlarged, the sealability is further improved without sacrificing the fastening force of the blind rivet even when the thickness of the sheath is increased.

In order to raise the force of the tube to connect to the blind rivet, it is possible to form the tubular portion of the sheath in a non-circular sectional shape such as an ellipse or a hexagon to fit the rivet body shank which is of substantially sectional circular shape in the tubular portion. In addition, according to the present invention, there is provided a sheath formed in a tube having a tubular portion to cover the diametrically enlarged head of the mandrel and the shank of the rivet body and a flange to come in surface-contact with the flange of the rivet body, a raised portion formed on the inner surface of the sheath for fitting in the circumferential groove of the rivet body shank.

## Claims

**1** A blind rivet (1) comprising a hollow rivet body (4) including a shank (2) and a flange (3) on one end of the shank and a mandrel (5) which is longer than the body and is inserted into the hollow hole of the body, the mandrel being inserted so that a diametrically enlarged head (7) thereof is positioned on the shank end opposite to the flange, the shank of the rivet body being buckled to expand by strongly pulling the mandrel, the blind rivet being attached to an attachment member such as a panel (19, 20) by means of the buckled shank and the flange; characterised in that the rivet body is covered with a plastic sheath (10), which is formed into a tube having a tubular portion (12) to cover the diametrically enlarged head (7) of the mandrel and the shank of the rivet body; the outer surface of the rivet body shank is formed with a circumferential groove (15); and the inner surface of the tubular sheath is formed with a raised portion (17) so that the raised portion (17) fits into the circumferential groove (15).

**2** A blind rivet according to claim 1, characterised in that the plastic sheath which is formed into the tube having the tubular portion (9) also has a flange (13) to come into surface-contact with the flange (3) of the rivet body.

**3** A blind rivet according to claim 1 or claim 2, characterised in that the tubular portion (12) of the tubular sheath is formed in a non-circular sectional shape such as an ellipse or a hexagon and the rivet body shank (2) having a substantially circular sectional shape is forcibly fitted in the tubular portion.

**4** A blind rivet according to claim 2, characterised in that the flange (13) of the tubular sheath is formed with an annular portion (21) which surrounds the periphery of the rivet body flange (3) fitted therein.

**5** A blind rivet according to any of claims 1 to 4, characterised in that the circumferential groove (15) on the surface of the rivet body shank (2) is formed on the side closer to the end with the diametrically enlarged head (7) so that when the shank is buckled, a shank portion (16) between the circumferential groove (15) and the diametrically enlarged head (7) side end can get inside the buckled portion of the shank.

**6** A plastic sheath to cover a rivet body of a blind rivet which comprises a hollow rivet body (4) having a shank (2) and a flange (3) on one end of the shank and a mandrel (5) which is longer than the body and is inserted into the hollow hole of the body; characterised in that the sheath is formed in a tube having a tubular portion (12) to cover the diametrically enlarged head of the mandrel and the shank of the rivet body, and the inner surface of the sheath is formed with a raised portion (17) to fit in a circumferential groove (15) of the rivet body shank (2).

**7** A plastic sheath according to claim 6, characterised in that the sheath which is formed in the tube having the tubular portion (12) also has a flange (13) to come in surface-contact with the flange (3) of the rivet body.

**8** A blind rivet according to any of claims 1 to 5 characterised in that the tubular sheath (10) is in a cap-like form an end of which is closed.

**9** A sheath according to either claim 6 or claim 7 characterised in that the sheath (10) has one closed end formed in a cap configuration.
